# EUROPÄISCHE PATENTSCHRIFT

(11) **EP 2 653 142 B1**
(45) Veröffentlichungstag und Bekanntmachung des Hinweises auf die Patenterteilung: **28.10.2015**
(21) Anmeldenummer: 13001379.0
(22) Anmeldetag: 18.03.2013
(51) Int. Cl.: A61G 3/06, A61G 3/08

(54) **Hubvorrichtung zur Aufnahme von Lasten, insbesondere eines Rollstuhls in einem Transportfahrzeug**
Lifting device for picking up loads, in particular a wheelchair in a transport vehicle
Dispositif de levage destiné à la réception de charges, notamment un fauteuil roulant dans un véhicule de transport

(30) Priorität: 16.04.2012 DE 102012008473
(43) Veröffentlichungstag der Anmeldung: 23.10.2013
(73) Patentinhaber: MAN Truck & Bus AG, 80995 München (DE)
(72) Erfinder: Elsner, Thomas, 83278 Traunstein (DE); Elsner, Ingrid, 83278 Traunstein (DE)

(56) Entgegenhaltungen:
- EP-A1- 0 715 986
- CA-A1- 2 251 166
- DE-A1- 19 606 196
- NL-C2- 1 008 208
- US-A1- 2010 329 831

## Beschreibung

Die Erfindung betrifft eine Hubvorrichtung zur Aufnahme von Lasten, insbesondere eines Rollstuhls in einem Transportfahrzeug nach dem Oberbegriff des Anspruchs 1.

Transportfahrzeuge, insbesondere Kleinbusse zur Beförderung von gehbehinderten Menschen haben oftmals komplizierte mechanische Vorrichtungen, um Rollstühle anzuheben und aufnehmen zu können. Konkret sind Kleinbusse mit Hecktüren bekannt, bei denen eine sehr große Rampe ausklappbar ist. Das manuelle Ausklappen und Ausziehen der Rampe ist aufwändig und beschwerlich. Zudem wird durch ein Teleskop die Rampe verlängert und behindert im eingeklappten Zustand die Sicht nach hinten. Für eine Rollstuhlrampe ist eine Steigung von höchstens 36% zulässig. Um dies zu erreichen, ist weiter eine sehr aufwändige und teure Einrichtung erforderlich, damit das gesamte Fahrzeug abgesenkt werden kann. Eine einfache Nachrüstlösung für einen Kleinbus ist daher nicht möglich.

Weiter sind sogenannte Unterflurliftsysteme allgemein bekannt, welche mit einer komplizierten Kinematik unter dem Fahrzeugboden angebracht sind. Von dort kann eine Rampe/Hubplatte in eine Funktionsstellung, beispielsweise an einer Seitentür ausgeschwenkt werden. Eine solche Unterbodenmontage hat erhebliche Nachteile, wobei insbesondere die Funktionssicherheit durch Verschmutzung und Einfrieren beeinträchtigt sein kann. Zudem wird die Bodenfreiheit reduziert mit der Gefahr des Aufsitzens bei Bodenunebenheiten und der Beschädigung des Systems.

Mit den vorstehend beschriebenen Systemen können anstelle von Rollstühlen auch allgemein Lasten/Gegenstände, insbesondere mit Transportwagen/Sackkarren beladen werden. Bei beiden Systemen dient die Rampe als Auffahrhilfe, ein Rollstuhl oder ein anderer Gegenstand wird dann in das Fahrzeug geschoben und unmittelbar auf dem Fahrzeugboden abgestellt. Die Rampe hat im eingeschwenkten Zustand keine Halte- oder Tragfunktion.

Aus der NL 1 008 208 C2 ist ein Transportfahrzeug mit einem Unterflurbodenlift bekannt, bei der eine Hubplatte mittels einer Zylinder-Kolben-Einheit aus dem Fahrzeuginnenraum aus-schiebbar und in eine Hubstellung überführbar ist. Von der Hubstellung ausgehend kann die Hubplatte gesteuert mittels eines Scherengelenks in die Absenkstellung überführt werden.

Aufgabe der Erfindung ist es, eine Hubvorrichtung zur Aufnahme von Lasten, insbesondere eines Rollstuhls in einem Transportfahrzeug vorzuschlagen, die einfach, funktionssicher und kostengünstig aufgebaut ist.

Diese Aufgabe wird mit den Merkmalen des Patentanspruchs 1 gelöst. Vorteilhafte Ausgestaltungen sind Gegenstand der Unteransprüche.

Gemäß Anspruch 1 ist vorgesehen, dass die Hubvorrichtung aus einem auf dem Fahrzeugboden horizontal zum Aus- und Einfahren aus dem Fahrzeug verschiebbar gehaltenen Rahmenteil und einer am Rahmenteil verstellbar gehaltenen Hubplatte besteht. Die Hubplatte ist in einer Ausfahrstellung des Rahmenteils von diesem zur barrierefreien Aufnahme von Lasten fahrzeugaußenseitig in horizontaler Lage von einer Hubstellung auf den Boden in eine Absenkstellung absenkbar. In dieser Absenkstellung kann ein Rollstuhlfahrer bequem und mit minimalem Kraftaufwand auf die horizontalliegende Hubplatte auffahren. Anschließend wird die Hubplatte wieder in die angehobene Hubstellung zusammen mit dem Rollstuhl oder gegebenenfalls anderen aufgebrachten Lasten in horizontaler Lage auf ein Niveau etwas über dem Fahrzeugboden angehoben. Anschließend wird das Rahmenteil von der Ausfahrstellung zusammen mit der angehobenen Hubplatte und dem darauf abgestellten Rollstuhl oder gegebenenfalls anderer Lasten zurück in eine Grundstellung in das Fahrzeug eingefahren, womit der Beladevorgang abgeschlossen ist.

Für die Verlagerung der Hubplatte zwischen der Hubstellung (bei ausgeschobenen Rahmenteil) und der Absenkstellung wird am Rahmenteil und zusammen mit diesem verschiebbar eine steuerbar angetriebene Hubvorrichtung angebracht. Insgesamt ist daher die Konstruktion einfach, überschaubar und raumsparend.

Konkret ist die Hubvorrichtung aus zwei gleichen am Rahmenteil, insbesondere an den Führungsschienen neben der Hubplatte angebrachten Hubeinheiten aufgebaut. Solche seitlich neben der Hubplatte liegende Hubeinheiten ermöglichen die gesamte Stellfläche der Hubplatte ohne Einschränkungen zu benützen.

Ein besonders einfacher Aufbau wird erfindungsgemäß dann erreicht, da beide Hubeinheiten jeweils einen in Aus-/Einfahrrichtung verlaufenden Linearantrieb aufweisen und beide Linearantriebe für eine horizontale Lage der Hubplatte während ihrer Bewegung gleichzeitig korreliert steuerbar sind. Um die horizontale Bewegung des Stellteils eines Linearantriebs für die vertikale Hubbewegung der Hubplatte umzulenken, sind Zugelemente erforderlich, welche über Umlenkrollen mit den jeweils seitenzugeordneten Ecken der Hubplatte verbunden sind. Als Zugelemente und Umlenkrollen sind grundsätzlich Zugseile mit Seilrollen möglich, vorzugsweise werden für korrelierte Hubbewegungen jedoch Ketten mit Umlenk-Zahnrädern und/oder Zahnriemen mit Umlenk-Zahnriemenscheiben eingesetzt.

Die erfindungsgemäße Hubvorrichtung verwendet somit eine Hubplatte, die jeweils in horizontaler Lage aus dem Fahrzeug ausgefahren und abgesenkt und zusammen mit einem darauf abgestellten Ladegut/Rollstuhl wieder zurück ins Fahrzeug verlagert wird. Eine aufwändige teure Absenkeinrichtung für das gesamte Fahrzeug sowie eine sicherheitskritische Unterbodenmontage sind hier nicht erforderlich. Da die erfindungsgemäßen Bauteile auf dem Fahrzeugboden angebracht werden können, ist auch eine einfache und kostengünstige Nachrüstung einer erfindungsgemäßen Hubvorrichtung problemlos möglich.

Bei einer vorteilhaften konkreten Ausführungsform weist das Rahmenteil zwei beabstandete, parallel in Aus-/Einschubrichtung verlaufende und an bodenfesten Führungselementen, vorzugsweise an Führungsrollen verschiebbar gehaltene Führungsschienen auf. Die Hubplatte ist als Rechteckplatte im ausfahrseitigen Bereich zwischen den Führungsschienen ausgebracht, wobei diese mit einer Teillänge so weit aus dem Fahrzeug ausschiebbar sind, bis die Hubplatte fahrzeugaußenseitig auf dem Niveau der Führungsschienen in der Hubstellung beabstandet zum Boden liegt. Aus dieser Stellung kann dann die Hubplatte fahrzeugaußenseitig auf den Boden abgesenkt und anschließend wieder zurück in ihre Hubstellung angehoben werden, wonach sie zusammen mit dem Rahmenteil wieder in das Fahrzeug einschiebbar ist.

Grundsätzlich kann das Rahmenteil mit der Hubplatte manuell aus dem Fahrzeug ausgeschoben und wieder eingeschoben werden. Für einen bequemen Schiebevorgang ohne Aufwand und Krafteinsatz wird jedoch vorgeschlagen, dass das Rahmenteil mit wenigstens einem am Fahrzeugboden befestigten und abgestützten Linearantrieb gesteuert zwischen der eingeschobenen Grundstellung und der Ausfahrstellung verfahrbar ist.

Das Rahmenteil kann sehr einfach ausgebildet sein und lediglich aus den beiden beabstandeten Führungsschienen bestehen, die mit wenigstens einem Querträger, insbesondere mit einem Querträger nach der Hubplatte verbunden sind. Ein verwendeter Linearantrieb kann dann zur gemeinsamen gleichzeitigen Verschiebung der Führungsschienen an diesen Querträger angebunden sein. Als funktionsfähiger, einfacher und kostengünstiger sowie platzsparender Linearantrieb kann dabei eine pneumatisch oder hydraulisch betätigbare Zylinder-Kolben-Einheit verwendet werden. Grundsätzlich sind auch andere Linearantriebe, insbesondere elektrische Antriebe möglich.

Der Linearantrieb einer Hubeinheit kann einfach aus einer pneumatisch oder hydraulisch betätigbaren Zylinder-Kolben-Einheit bestehen, wobei der Zylinder jeweils an der Oberseite längs einer zugeordneten Führungsschiene befestigt ist. Das verschiebbare Kolbenstangenende wird dann jeweils mit einem Zugelement für eine vordere Eckenanbindung und mit einem Zugelement für eine hintere Eckenanbindung an der Hubplatte verbunden. Die zweite Hubeinrichtung ist ersichtlich mit gleichen Zugelementlängen auszuführen, um eine gleichmäßige Hubverlagerung der Hubplatte in einer horizontalen Stellung zu gewährleisten.

Konkret ist dabei ein Zugelement über eine in Kolbenausfahrrichtung an der Führungsschiene angebrachte erste Umlenkrolle für ein Absenken/Anheben der dortigen vorderen Hubplattenecke geführt. Das andere Zugelement ist über eine neben der ersten Umlenkrolle liegende zweite Umlenkrolle zurück am Zylinder vorbei zu einer dritten an der Führungsschiene angebrachten Umlenkrolle und von dort zur hinteren Hubplattenecke geführt, dergestalt, dass bei einer Kolbenstangenbewegung beide Hubplattenecken gleichzeitig um den gleichen Weg abgesenkt/angehoben werden. Für eine gleichmäßige Bewegung der Hubplatte ist ersichtlich auch die zweite Hubeinheit entsprechend anzusteuern.

Vorzugsweise ist die erfindungsgemäße Hubvorrichtung für den Einbau in Kleintransporter oder Kleinbusse mit einem geschlossenen Aufbau und mit wenigstens einer Hecktür und/oder Seitentür konzipiert.

Bei einem Aufbau mit Hecktüren kann ein Längsverbau erfolgen mit relativ langen Führungsschienen. Zudem kann dabei ein eingeladener Rollstuhl von der Hubplatte nach vorne herunterfahren, wodurch gegebenenfalls zwei Rollstühle hintereinander stehend transportierbar sind.

Wenn das Rahmenteil mit der Hubplatte aus einer Seitentür eines Aufbaus ausgefahren werden soll, ist ein Querverbau der Hubvorrichtung erforderlich. Dabei können die Führungsschienen als an sich bekannte Teleskopschienen ausgebildet werden, da in Fahrzeugquerrichtung der Platz für die Führungsschienen begrenzt ist.

Anhand einer Zeichnung wird ein Ausführungsbeispiel der Erfindung erläutert:
Es zeigen:
   - Fig. 1: eine schematische, perspektivische Darstellung eines Kleinbusses mit einer eingebauten Hubvorrichtung,
   - Fig. 2: eine vergrößerte Darstellung der Hubvorrichtung,
   - Fig. 3: eine Detailansicht einer Rollenführung für eine Führungsschiene,
   - Fig. 4: eine perspektivische Ansicht mit einer abgesenkten Hubplatte,
   - Fig. 5: eine Darstellung entsprechend Fig. 4 mit einem aufgefahrenen Rollstuhl,
   - Fig. 6: die Hubvorrichtung entsprechend Fig. 2, jedoch in der eingefahrenen Grundstellung mit einem Rollstuhl,
   - Fig. 7: eine schematische Seitenansicht eines Kleinbusses mit zwei aufgenommenen Rollstühlen.

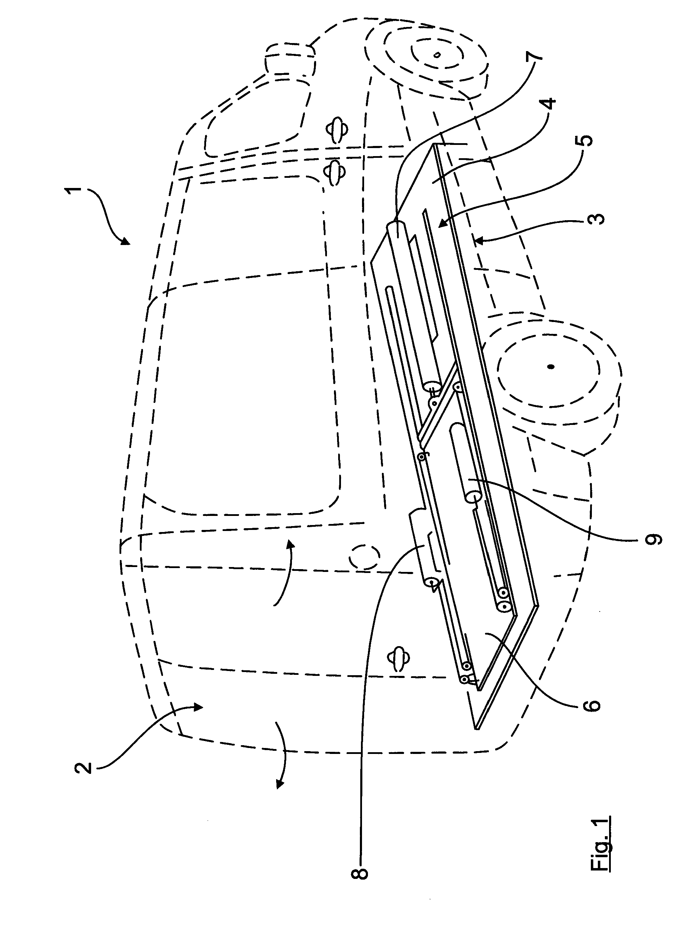

In Fig. 1 ist (schematisch) ein Kleinbus 1 mit einem geschlossenen Aufbau und zwei öffenbaren Hecktüren 2 sowie mit einer Hubvorrichtung 3 dargestellt. Die Hubvorrichtung 3 ist auf dem Fahrzeugboden 4 montiert, der hier und in den weiteren Figuren schematisch als Rechteckplatte dargestellt ist.

Die Hubvorrichtung 3 ist in Fig. 1 in der eingefahrenen Grundstellung bei geschlossenen Hecktüren 2 dargestellt.

Die Hubvorrichtung 3 besteht aus einem in Fahrzeuglängsrichtung ausschiebbaren Rahmenteil 5 und einer Hubplatte 6 sowie drei steuerbaren Antrieben als Zylinderkolbeneinheiten 7, 8,9.

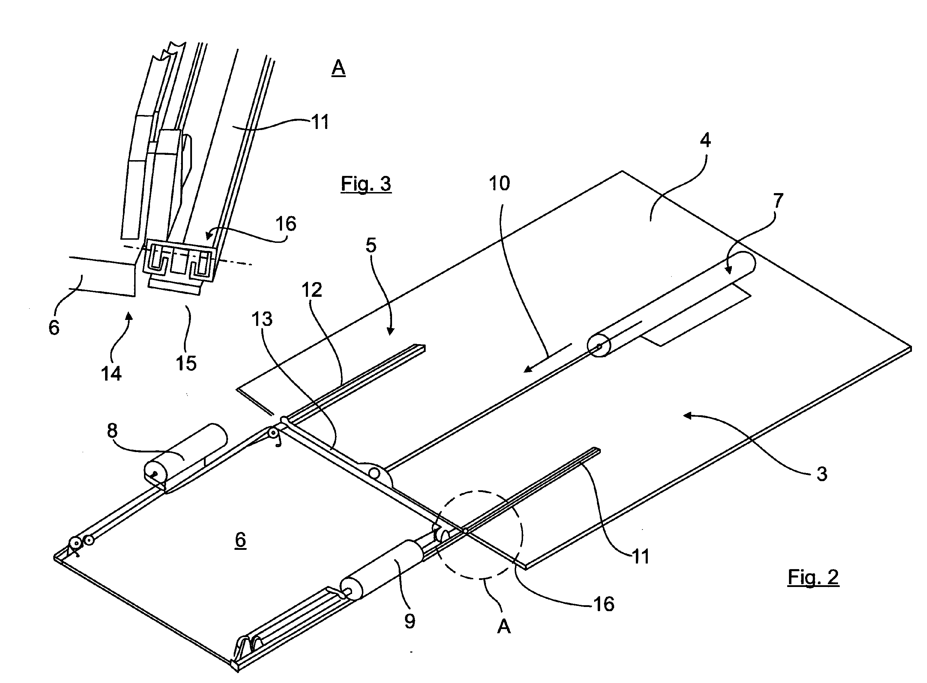

Unter Beiziehung der Fig. 2 bis 4 wird die Hubvorrichtung 3 mit weiteren Details erläutert:
In Fig. 2 ist die separat dargestellte Hubvorrichtung 3 (ohne Einbau) gezeigt mit dem (schematischen) Fahrzeugboden 4, mit dem aus dem Kleinbus 1 bei geöffneten Hecktüren 2 bereits ausgefahrenen Rahmenteil 5 und der auf der Höhe des Fahrzeugbodens 4 fahrzeugaußenseitig in seiner Hubstellung liegenden Hubplatte 6.

Das Rahmenteil 5 besteht aus zwei beabstandeten und in Ausschieberichtung (Pfeil 10) gerichteten Führungsschienen 11, 12, die durch einen Querträger 13 verbunden sind. Als steuerbarer Antrieb für die Verschiebung des Rahmenteils 5 ist die Zylinder-Kolben-Einheit 7 vorgesehen, deren Zylinder in Längsrichtung und mittig zu den Führungsschienen 11, 12 am Fahrzeugboden 4 befestigt ist und deren Kolbenstange mit dem Querträger 13 verbunden ist.

Die Führungsschienen 11, 12 sind mit einer Rollenlagerung 14 (vergrößerter Bereich A in Fig. 3) gehalten und geführt. Dazu ist jeweils ein Rollenhalter 15 mit zwei beabstandeten Rollen 16 im Verlauf der Führungsschienen 11, 12 am Fahrzeugboden 4 befestigt, wobei die Rollen 16 in ein zugeordnetes Profil der Führungsschienen 11, 12 eingreifen.

Bei der in Fig. 2 gezeigten Ausfahrstellung des Rahmenteils 5 liegt die Hubplatte 6 in ihrer angehobenen Hubstellung zwischen den Führungsschienen 11, 12 vor dem Querträger 13 und bereits außerhalb des Fahrzeugs (entsprechend vor der Vorderkante 16 des schematisch dargestellten Fahrzeugbodens 4).

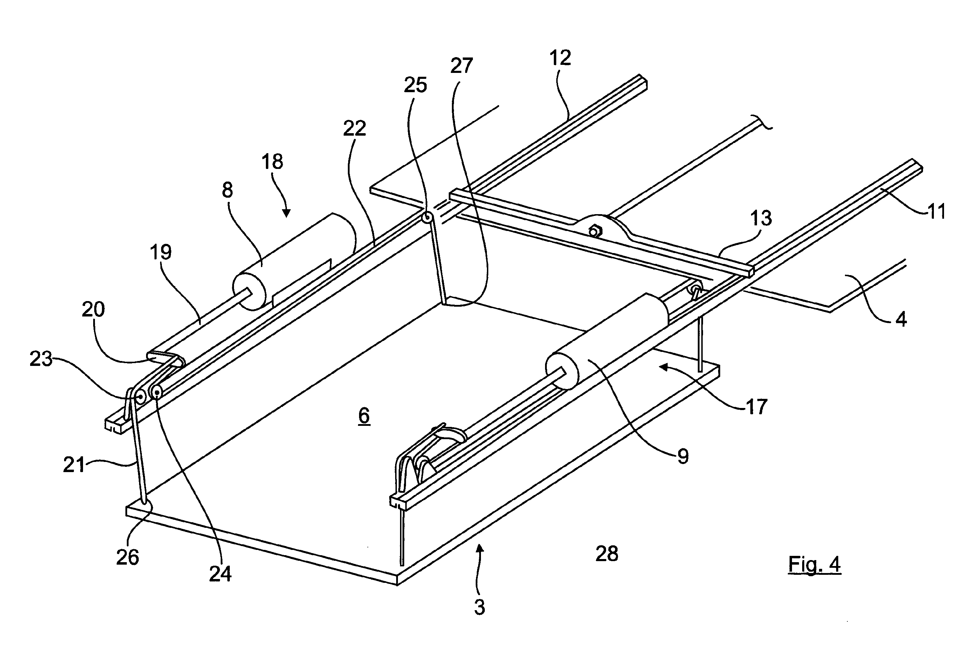

In Fig. 4 ist die Hubplatte 6 in ihrer hinter dem Kleinbus 1 abgesenkten Absenkstellung gezeigt, wobei die Hubplatte 6 durch Betätigung zweier Hubeinheiten 17, 18 aus der in Fig. 2 dargestellten Hubstellung in die Absenkstellung nach Fig. 4 unter Beibehaltung ihrer horizontalen Position verlagert wurde. Die Hubeinheiten 17, 18 sind spiegelbildlich gleich aufgebaut. Anhand der Hubeinheit 18 werden die Details näher erläutert, die spiegelbildlich auch auf die Hubeinheit 17 zutreffen.

Die Hubeinheit 18 weist die Zylinder-Kolben-Einheit 8 auf, deren Zylinder längs auf und seitlich an der Führungsschiene 12 in einem längsmittleren Bereich der Hubplatte 6 befestigt ist. Die ausfahrbare Kolbenstange 19 trägt endseitig einen Halter 20, an dem zwei Zahnriemenabschnitte 21 und 22 angelenkt sind. Der Zahnriemenabschnitt 21 verläuft in Ausschieberichtung der Kolbenstange 19 über eine führungsschienenfeste erste Umlenkrolle 23 zu einem Anbindungspunkt an einer Hubplattenecke 26. Der andere Zahnriemenabschnitt 22 verläuft anfangs ebenfalls parallele zum Zahnriemenabschnitt 21 bis zu einer zweiten Umlenkrolle 24 neben der ersten Umlenkrolle 23 und von dort am Zylinder der Zylinderkolbeneinheit 8 vorbei zu einer dritten Umlenkrolle 25 und von dort weiter nach unten zu der längsgegenüberliegenden Hubplattenecke 27.

Die Ausschiebelänge der Kolbenstange 19 sowie die Länge der Zahnriemenabschnitte 21, 22 sind so gewählt, dass, wie in Fig. 4 gezeigt, die Hubplatte 6 bei ausgefahrener Kolbenstange 19 auf den Boden 28 hinter dem Kleinbus 1 absenkbar ist, wobei die Hubeinheiten 17, 18 korreliert anzusteuern sind. Beim Einziehen der Kolbenstange 19 werden die Zahnriemenabschnitte 21, 22 zurückgezogen und die Hubplatte 6 kann in die, in Fig. 2 dargestellte Hubstellung zurückgeführt werden.

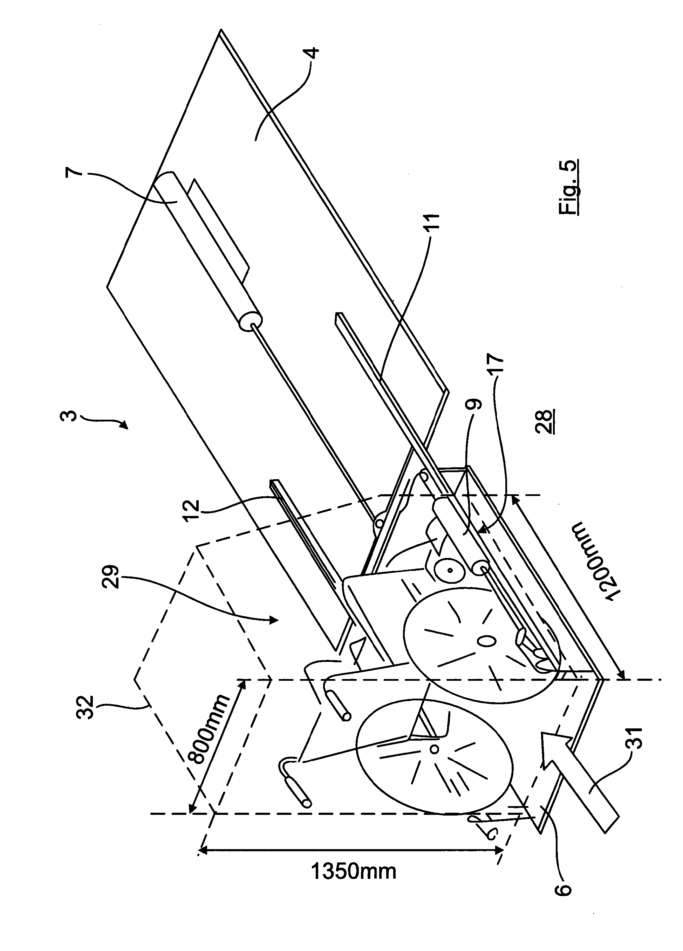

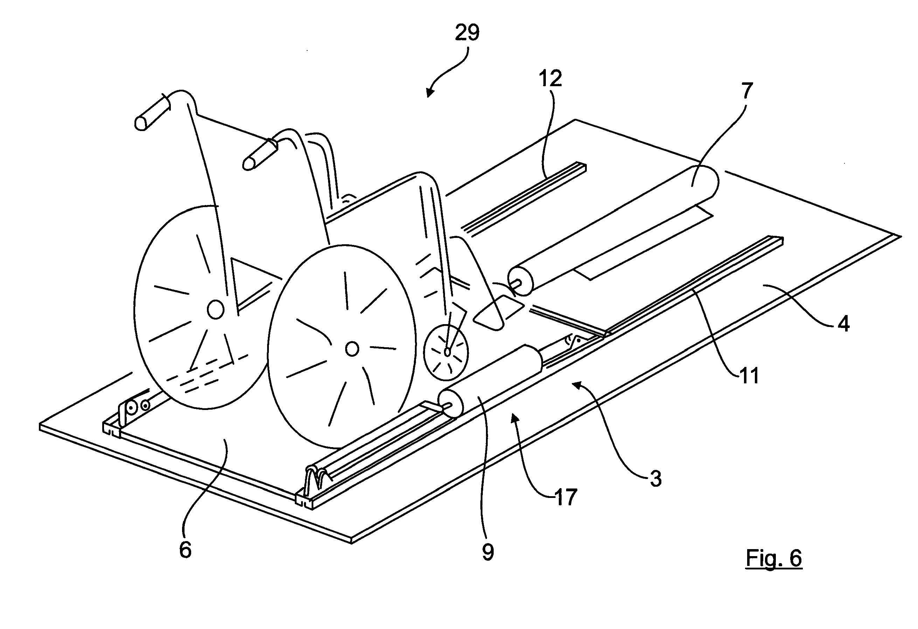

Anhand der Fig. 5 bis 7 wird die Beladung und der Transport mit einem/zwei Rollstühlen 29, 30 gezeigt:
In Fig. 5 ist entsprechend Fig. 4 die Hubplatte 6 der Hubvorrichtung 3 bereits in ihrer ausgefahrenen Absenkstellung gezeigt. Ein Rollstuhl 29 ist bereits auf die eben auf dem Boden 38 liegende Hubplatte 6 aufgefahren und abgestellt worden (Pfeil 31). Zudem ist schematisch um den Rollstuhl 29 ein Quader 32 strichliert eingezeichnet mit einer Grundfläche von 1200mm x 800mm und einer Höhe von 1350mm. Diese Quaderabmessungen sind mindestens für einen Rollstuhltransport zur Verfügung zu stellen. Wie aus Fig. 5 ersichtlich, stehen bei Verwendung der erfindungsgemäßen Hubvorrichtung 3 diese Abmessungen problemlos zur Verfügung.

Ausgehend von der Lage der Hubplatte 6 bzw. des Rollstuhls 29 wird nun die Hubplatte 6 durch Betätigung der Hubeinheiten 17, 18 in die Hubposition (Fig. 2) zusammen mit dem Rollstuhl 29 angehoben. Anschließend wird durch Betätigung der Zylinderkolbeneinheit 7 das Rahmenteil 5 mit den Führungsschienen 11, 12 zusammen mit der Hubplatte 6 und dem Rollstuhl 29 zurück auf den Fahrzeugboden 4 gezogen, wodurch der Rollstuhl 29 auf der Hubplatte 6 stehend in den Kleinbus 1 eingeladen ist.

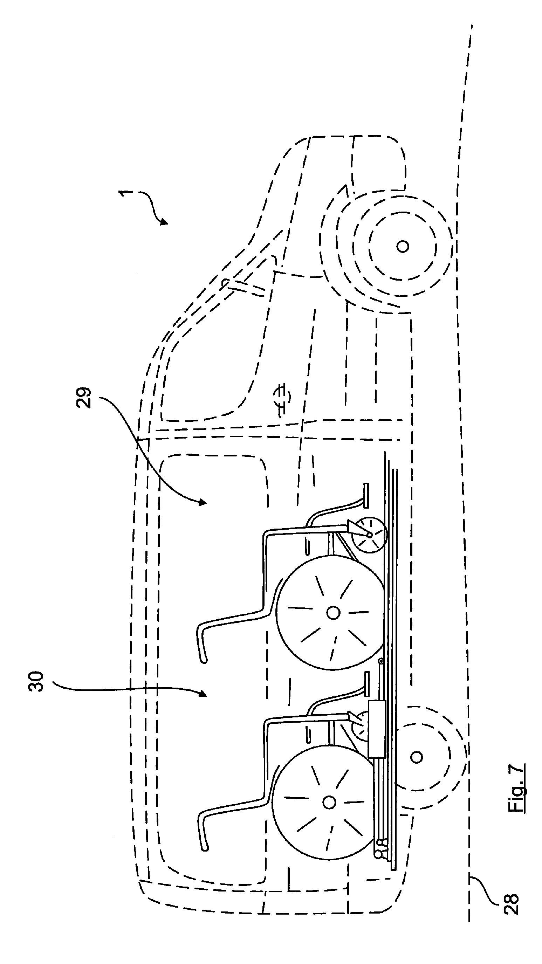

Wie in Fig. 7 dargestellt kann der Rollstuhl 29 von der Hubplatte 6 herunter über den Bereich der Zylinder-Kolben-Einheit 7 fahren, wodurch die Hubvorrichtung 3 für die Beladung eines weiteren Rollstuhls 30 wieder frei ist, so dass, wie in Fig. 7 gezeigt, problemlos zwei Rollstühle 29, 30 hintereinanderstehend im Kleinbus 1 transportierbar sind.

**Bezugszeichenliste**

| | | | |
|---|---|---|---|
| 1 | Kleinbus | 27 | Hubplattenecke |
| 2 | Hecktüren | 28 | Boden |
| 3 | Hubvorrichtung | 29 | Rollstuhl |
| 4 | Fahrzeugboden | 30 | Rollstuhl |
| 5 | Rahmenteil | 31 | Pfeil |
| 6 | Hubplatte | 32 | Quader |
| 7 | Zylinder-Kolben-Einheit | | |
| 8 | Zylinder-Kolben-Einheit | | |
| 9 | Zylinder-Kolben-Einheit | | |
| 10 | Pfeil | | |
| 11 | Führungsschiene | | |
| 12 | Führungsschiene | | |
| 13 | Querträger | | |
| 14 | Rollenlagerung | | |
| 15 | Rollenhalter | | |
| 16 | Vorderkante | | |
| 17 | Hubeinheit | | |
| 18 | Hubeinheit | | |
| 19 | Kolbenstange | | |
| 20 | Halter | | |
| 21 | Zahnriemenabschnitt | | |
| 22 | Zahnriemenabschnitt | | |
| 23 | erste Umlenkrolle | | |
| 24 | zweite Umlenkrolle | | |
| 25 | dritte Umlenkrolle | | |
| 26 | Hubplattenecke | | |

## Patentansprüche

1. Hubvorrichtung zur Aufnahme von Lasten, insbesondere eines Rollstuhls in einem Transportfahrzeug,
wobei die Hubvorrichtung (3) aus einem auf dem Fahrzeugboden (4) horizontal zum Aus- und Einfahren aus dem Fahrzeug (1) verschiebbar gehaltenen Rahmenteil (5) und einer am Rahmenteil (5) verstellbar gehaltenen Hubplatte (6) besteht,
wobei die Hubplatte (6) in einer Ausfahrstellung des Rahmenteils (5) von diesem zur barrierefreien Aufnahme von Lasten (29) fahrzeugaußenseitig in horizontaler Lage von einer Hubstellung auf den Boden (28) in eine Absenkstellung absenkbar ist,
wobei die Hubplatte (6) wieder in die angehobenen Hubstellung zusammen mit den aufgebrachten Lasten (29) anhebbar ist,
wobei das Rahmenteil (5) von der Ausfahrstellung zusammen mit der angehobenen Hubplatte (6) und den aufgebrachten Lasten, insbesondere mit wenigstens einem Rollstuhl (29) in eine Grundstellung in das Fahrzeug (1) einfahrbar ist,
wobei für die Verlagerung der Hubplatte (6) zwischen der Hubstellung und Absenkstellung am Rahmenteil (5) und mit diesem verschiebbar eine steuerbar angetriebene Hubeinrichtung (17, 18) angebracht ist, und
wobei die Hubeinrichtung aus zwei gleichen, am Rahmenteil (5) neben der Hubplatte (6) angebrachten Hubeinheiten (17, 18) besteht,
**dadurch gekennzeichnet, dass** jede Hubeinheit (17, 18) einen in Aus-/Einfahrrichtung verlaufenden Linearantrieb (8, 9) aufweist, und beide Linearantriebe (8, 9) gleichzeitig korreliert steuerbar sind, und
dass jeweils das Stellteil (19) eines Linearantriebs (8, 9) über Umlenkrollen (23, 24, 25) mit Zugelementen (21, 22) mit den seitenzugeordneten Ecken (26, 27) der Hubplatte (6) verbunden sind.

2. Hubvorrichtung nach Anspruch 1, **dadurch gekennzeichnet, dass** das Rahmenteil (5) zwei beabstandete, parallel in Aus-/Einschubrichtung verlaufende und an bodenfesten Führungselementen vorzugsweise an Führungsrollen (14) verschiebbar gehaltene Führungsschienen (11, 12) aufweist,
dass die Hubplatte (6) als Rechteckplatte zwischen den Führungsschienen (11, 12) liegt und diese mit einer Teillänge soweit aus dem Fahrzeug (1) ausschiebbar sind, bis die Hubplatte (6) fahrzeugaußenseitig in ihrer Hubstellung beabstandet zum Boden (28) liegt.

3. Hubvorrichtung nach Anspruch 1 oder 2, **dadurch gekennzeichnet, dass** das Rahmenteil (5) mit wenigstens einem am Fahrzeugboden (4) befestigten Linearantrieb (7) gesteuert zwischen der Grundstellung und Ausfahrstellung verfahrbar ist.

4. Hubvorrichtung nach einem der Ansprüche 1 bis 3, **dadurch gekennzeichnet, dass**
das Rahmenteil (5) aus zwei Führungsschienen (11, 12) und einem diese nach der Hubplatte (6) verbindenden Querträger (13) besteht, und
dass als Linearantrieb eine pneumatisch oder hydraulisch betätigbare Zylinder-Kolben-Einheit (7) verwendet ist, deren ausschiebbares Kolbenende mit dem Querträger (13) zur gemeinsamen Verschiebung der Führungsscheinen (11, 12) verbunden ist.

5. Hubvorrichtung nach einem der Ansprüche 1 bis 4, **dadurch gekennzeichnet, dass** der Linearantrieb jeweils aus einer pneumatisch oder hydraulisch betätigbaren Zylinder-Kolben-Einheit (8, 9) besteht, deren Zylinder jeweils an der Oberseite einer zugeordneten Führungsschiene (11, 12) befestigt ist und deren Kolbenstangenende (20) mit einem Zugelement (21) für eine vordere Ecke (26) und mit einem Zugelement (22) für eine hintere Ecke (27) der Hubplatte (6) verbunden ist,
dass ein Zugelement (21) über eine in Kolbenausfahrrichtung an der Führungsschiene (12) angebrachte erste Umlenkrolle (23) für ein Absenken/Anheben der dortigen vorderen Hubplattenecke (26) zu dieser geführt ist, und
dass das andere Zugelement (22) über eine neben der ersten Umlenkrolle (23) liegende zweite Umlenkrolle (24) am Zylinder vorbei zu einer dritten an der Führungsschiene (12) angebrachten Umlenkrolle (25) und von dort zur hinteren Hubplattenecke (27) geführt ist, dergestalt, dass bei einer Kolbenstangenbewegung beide Hubplattenecken (26, 27) gleichzeitig um den gleichen Weg abgesenkt/angehoben werden.

6. Hubvorrichtung nach einem der Ansprüche 1 bis 5, **dadurch gekennzeichnet, dass** als Zugelemente und Umlenkrollen Zugseile mit Seilrollen und/oder Ketten mit Zahnrädern und/oder Zahnriemen (21, 22) mit Zahnriemenscheiben (23, 24, 25) verwendet werden.

7. Hubvorrichtung nach einem der Ansprüche 1 bis 6, **dadurch gekennzeichnet, dass** das Transportfahrzeug ein Kleintransporter oder ein Kleinbus (1) mit einem geschlossenen Aufbau mit wenigstens einer Hecktür (2) und/oder einer Seitentür ist.

8. Hubvorrichtung nach einem der Ansprüche 1 bis 7, **dadurch gekennzeichnet, dass** insbesondere bei einem Querverbau der Hubvorrichtung (3) die Führungsschienen als Teleskopschienen ausgebildet sind.

9. Hubvorrichtung nach einem der Ansprüche 1 bis 7, **dadurch gekennzeichnet, dass** die Hubvorrichtung (3) längsverbaut ist, dergestalt, dass gegebenenfalls zwei Rollstühle (29, 30) hintereinander stehend beladbar und transportierbar sind.

## Claims

1. A lifting apparatus for receiving loads, in particular a wheelchair in a transport vehicle,
wherein the lifting apparatus (3) comprises a frame part (5), which is retained on the vehicle floor (4) such that it can be displaced horizontally in order to be extended out of the vehicle (1) and retracted therein, and also a lifting panel (6), which is retained in an adjustable manner on the frame part (5),
wherein, in an extended position of the frame part (5), the lifting panel (6) can be lowered horizontally from the latter on the outside of the vehicle from a lifted position into a lowered position on the ground (28), in order to receive loads (29) in a barrier-free manner,
wherein the lifting panel (6) can be raised again into the raised, lifted position together with the loads (29) supplied,
wherein the frame part (5) can be retracted from the extended position, together with the raised lifting panel (6) and the loads supplied, in particular with at least one wheelchair (29), into a basic position in the vehicle (1),
wherein, for the displacement of the lifting panel (6) between the lifted position and lowered position, a lifting device (17, 18), which is driven in a controllable manner, is fitted on the frame part (5), such that it can be shifted therewith, and
wherein the lifting device comprises two identical lifting units (17, 18) fitted on the frame part (5) alongside the lifting panel (6),
**characterized in that** each lifting unit (17, 18) has a linear drive (8, 9) running in the extending/retracting direction, and the two linear drives (8, 9) can be controlled in a simultaneously correlated manner, and
**in that** in each case the adjustment part (19) of a linear drive (8, 9) is connected to the side-assigned corners (26, 27) of the lifting panel (6) via deflecting rollers (23, 24, 25) with traction elements (21, 22).

2. The lifting apparatus according to Claim 1, **characterized in that** the frame part (5) has two spaced-apart guide rails (11, 12), which run parallel in the pushing-out/pushing-in direction and are retained in a displaceable manner on floor-mounted guide elements, preferably on guide rollers (14), and
**in that** the lifting panel (6), in the form of a rectangular panel, is located between the guide rails (11, 12) and said rails can have a sub-length pushed out of the vehicle (1) until the lifting panel (6) is located in its lifted position on the outside of the vehicle, at a distance from the ground (28).

3. The lifting apparatus according to Claim 1 or 2, **characterized in that** the frame part (5) can be displaced between the basic position and extended position in a controlled manner by way of at least one linear drive (7), which is fastened on the vehicle floor (4).

4. The lifting apparatus according to one of Claims 1 to 3, **characterized in that**
the frame part (5) comprises two guide rails (11, 12) and a crossmember (13), which connects said guide rails downstream of the lifting panel (6), and
**in that** the linear drive used is a pneumatically or hydraulically actuable cylinder/piston unit (7), of which the push-out piston end is connected to the crossmember (13) in order for the guide rails (11, 12) to be displaced together.

5. The lifting apparatus according to one of Claims 1 to 4, **characterized in that** the linear drive respectively comprises a pneumatically or hydraulically actuable cylinder/piston unit (8, 9), of which the cylinder is fastened respectively on the upper side of an associated guide rail (11, 12) and of which the piston-rod end (20) is connected to a traction element (21) for a front corner (26), and to a traction element (22) for a rear corner (27), of the lifting panel (6),
**in that** one traction element (21) is guided via a first deflecting roller (23), which is fitted on the guide rail (12) in the extending direction of the piston, to the front lifting-panel corner (26) there, in order for said front lifting-panel corner to be lowered/raised, and
**in that** the other traction element (22) is guided via a second deflecting roller (24), located alongside the first deflecting roller (23), past the cylinder to a third deflecting roller (25), which is fitted on the guide rail (12), and from there to the rear lifting-panel corner (27), such that, when the piston rod moves, the two lifting-panel corners (26, 27) are lowered/raised simultaneously by the same distance.

6. The lifting apparatus according to one of Claims 1 to 5, **characterized in that** the traction elements and deflecting rollers used are traction cables with cable rollers and/or chains with gearwheels and/or toothed belts (21, 22) with toothed-belt pulleys (23, 24, 25).

7. The lifting apparatus according to one of Claims 1 to 6, **characterized in that** the transport vehicle is a van or a minibus (1) of closed construction with at least one rear door (2) and/or one side door.

8. The lifting apparatus according to one of Claims 1 to 7, **characterized in that**, in particular in the case of the lifting apparatus (3) being constructed transversely, the guide rails are designed in the form of telescopic rails.

9. The lifting apparatus according to one of Claims 1 to 7, **characterized in that** the lifting apparatus (3) is constructed longitudinally, such that if appropriate two wheelchairs (29, 30) can be loaded, and transported, one behind the other.

## Revendications

1. Dispositif de levage, pour recevoir des charges, en particulier un fauteuil roulant dans un véhicule de transport,
le dispositif de levage (3) se composant d'une partie de cadre (5) maintenue de manière déplaçable sur le plancher du véhicule (4) horizontalement hors du véhicule (1) pour permettre une sortie et une entrée et d'une plaque de levage (6) maintenue de manière déplaçable sur la partie de cadre (5),
la plaque de levage (6) pouvant, dans une position sortie de la partie de cadre (5), être abaissée depuis celle-ci depuis une position de levage sur le plancher (28) dans une position d'abaissement, pour recevoir sans barrière des charges (29) du côté extérieur du véhicule dans une position horizontale,
la plaque de levage (6) pouvant à nouveau être soulevée dans la position de levage soulevée conjointement avec les charges appliquées (29),
la partie de cadre (5) pouvant être entrée de la position sortie conjointement avec la plaque de levage soulevée (6) et les charges appliquées, en particulier avec au moins un fauteuil roulant (29), dans une position de base dans le véhicule (1),
un dispositif de levage (17, 18) entraîné de manière commandable étant monté pour le déplacement de la plaque de levage (6) entre la position de levage et la position d'abaissement sur la partie de cadre (5) et de manière déplaçable avec celle-ci, et
le dispositif de levage se composant de deux unités de levage (17, 18) identiques montées à côté de la plaque de levage (6) sur la partie de cadre (5),
**caractérisé en ce que** chaque unité de levage (17, 18) présente un entraînement linéaire (8, 9) s'étendant dans la direction de sortie/entrée et les deux entraînements linéaires (8, 9) peuvent être commandés de manière corrélée simultanément, et
**en ce qu'**à chaque fois la partie de régalage (19) d'un entraînement linéaire (8, 9) est connectée par le biais de poulies de renvoi (23, 24, 25) avec des éléments de traction (21, 22) aux coins (26, 27) associés aux côtés de la plaque de levage (6).

2. Dispositif de levage selon la revendication 1, **caractérisé en ce que** la partie de cadre (5) présente deux rails de guidage (11, 12) espacés, s'étendant parallèlement dans la direction de sortie/entrée et retenus de manière déplaçable sur des éléments de guidage fixés au plancher, de préférence des rouleaux de guidage (14),
**en ce que** la plaque de levage (6), en tant que plaque rectangulaire, est située entre les rails de guidage (11, 12) et ceux-ci peuvent être sortis sur une longueur partielle hors du véhicule (1) jusqu'à ce que la plaque de levage (6) soit située du côté extérieur du véhicule dans sa position de levage à distance du plancher (28).

3. Dispositif de levage selon la revendication 1 ou 2, **caractérisé en ce que** la partie de cadre (5) peut être déplacée entre la position de base et la position sortie de manière commandée avec au moins un entraînement linéaire (7) fixé au plancher du véhicule (4).

4. Dispositif de levage selon l'une quelconque des revendications 1 à 3, **caractérisé en ce que** la partie de cadre (5) se compose de deux rails de guidage (11, 12) et d'une traverse (13) reliant ceux-ci après la plaque de levage (6), et
**en ce que** l'on utilise en tant qu'entraînement linéaire une unité cylindre-piston (7) pouvant être actionnée de manière pneumatique ou hydraulique, dont l'extrémité de piston pouvant être sortie est connectée à la traverse (13) en vue du déplacement commun des rails de guidage (11, 12).

5. Dispositif de levage selon l'une quelconque des revendications 1 à 4, **caractérisé en ce que** l'entraînement linéaire se ccmpose à chaque fois d'une unité cylindre-piston (8, 9) pouvant être actionnée de manière pneumatique ou hydraulique, dont le cylindre est à chaque fois fixé au côté supérieur d'un rail de guidage associé (11, 12) et dont l'extrémité de tige de piston (20) est connectée à un élément de traction (21) pour un coin avant (26) et à un élément de traction (22) pour un coin arrière (27) de la plaque de levage (6),
**en ce qu'**un élément de traction (21) est guidé par le biais d'une première poulie de renvoi (23) montée sur le rail de guidage (12) dans la direction de sortie du piston en vue d'un abaissement/levage du coin avant (26) de la plaque de levage s'y trouvant, vers celui-ci, et
**en ce que** l'autre élément de traction (22) est guidé par le biais d'une deuxième poulie de renvoi (24) située à côté de la première poulie de renvoi (23) devant le cylindre jusqu'à une troisième poulie de renvoi (25) montée sur le rail de guidage (12), et de là jusqu'au coin arrière (27) de la plaque de levage, de telle sorte que dans le cas d'un déplacement de la tige de piston, les deux coins (26, 27) de la plaque de levage soient abaisses/soulevés simultanément de la même distance.

6. Dispositif de levage selon l'une quelconque des revendications 1 à 5, **caractérisé en ce que** l'on utilise comme éléments de traction et poulies de renvoi des câbles de traction avec des poulies et/ou des chaînes avec des roues dentées et/ou des courroies dentées (21, 22) avec des poulies à courroie dentées (23, 24, 25).

7. Dispositif de levage selon l'une quelconque des revendications 1 à 6, **caractérisé en ce que** le véhicule de transport est un petit transporteur ou un minibus (1) avec une caisse fermée, comprenant au moins une porte arrière (2) et/ou une porte latérale.

8. Dispositif de levage selon l'une quelconque des revendications 1 à 7, **caractérisé en ce que** notamment dans le cas d'une construction transversale du dispositif de levage (3), les rails de guidage sont réalisés sous forme de rails télescopiques.

9. Dispositif de levage selon l'une quelconque des revendications 1 à 7, **caractérisé en ce que** le dispositif de levage (3) est construit en longueur, de telle sorte qu'éventuellement deux fauteuils roulants (29, 30) puissent être chargés debout l'un derrière l'autre et puissent être transportés.
